# FASCICULE DE BREVET EUROPEEN

(11) **EP 1 262 860 B1**
(45) Date de publication et mention de la délivrance du brevet: **27.07.2005**
(21) Numéro de dépôt: 02370018.0
(22) Date de dépôt: 07.05.2002
(51) Int. Cl.: G06F 1/00, G07F 7/10

(54) **Système et procédé d'authentification d'un utilisateur**
Vorrichtung und Verfahren zur Benutzerauthentisierung
System and method for user authentication

(30) Priorité: 28.05.2001 FR 0106943
(43) Date de publication de la demande: 04.12.2002
(73) Titulaire: Scrypto Systems, 59260 Lezennes (FR)
(72) Inventeur: Krystkowiak, Patrick, 59120 Loos (FR); Merlin, Pascal, 59390 Sailly-lez-Lannoy (FR)
(74) Mandataire: Matkowska, Franck

(56) Documents cités:
- DE-A- 19 841 886
- US-A- 4 672 533
- US-A- 6 067 621
- SCHNEIER B.: 'Cryptographie Appliquée', 1997, INTERNATIONAL THOMSON PUBLISHING, FRANCE chapter 2.5

## Description

La présente invention est relative à l'authentification électronique d'un utilisateur dans le domaine informatique, en vue par exemple d'autoriser ou non cet utilisateur à accéder à distance à une « fonction informatique » fournie par un serveur. Elle a pour objet un procédé et un système électronique d'authentification, de type statique, c'est-à-dire basés sur la mise en oeuvre d'un ensemble de mots de passe statiques préenregistrés pour la vérification du mot de passe envoyé par un utilisateur lors d'une procédure d'authentification, lesquels procédé et système d'authentification ont été perfectionnés en sorte d'améliorer la sécurité de la procédure d'authentification contre les fraudes.

Dans le présent texte, le terme « fonction informatique» doit être pris dans une acceptation très large. Il désigne toute fonction, application, service, donnée ou ensemble de données, à laquelle un utilisateur peut accéder à distance, et dont l'accès ou l'utilisation est conditionné par une autorisation préalable délivrée à l'issue d'une procédure d'authentification. Les « fonctions informatiques » peuvent ainsi être de tout type. A titre d'exemples, et de manière non limitative, il s'agit par exemple d'un service fourni par un serveur spécialisé (serveur de messagerie, serveur de fichiers, serveur d'impression, ...), une application logiciel disponible sur un serveur et pouvant être partagée par plusieurs utilisateurs, une ressource informatique telle que par exemple une base de données accessible à distance, une fonction d'accès à ordinateur ou à un réseau.

D'une manière générale, l'authentification est réalisée par une unité d'authentification, qui est plus communément désignée serveur d'authentification, et qui selon l'application peut être le même serveur que celui délivrant la « fonction » à laquelle souhaite accéder l'utilisateur, ou au contraire être un serveur distinct.

Dans le présent texte, le terme « serveur » est à prendre dans son sens très général, et désigne tout équipement, machine ou système informatique qui permet de centraliser une ou plusieurs « fonctions informatiques » et qui est accessible à distance par un utilisateur, via un réseau. Dans le présent texte, le terme «réseau» doit être compris dans son acceptation la plus large, et désigne tout moyen de communication permettant l'échange de données à distance entre un serveur et un utilisateur. Il peut s'agir d'un réseau local (LAN) tel que l'intranet d'une entreprise, d'un réseau longue distance (WAN) tel que par exemple le réseau Internet, ou encore d'un ensemble de réseaux interconnectés, et pouvant être de types différents.

De manière usuelle, pour déclencher une procédure d'authentification, l'utilisateur dispose d'une unité client, qui lui permet de communiquer à distance avec le serveur d'authentification. Dans le présent texte, le terme « unité client » désigne tout système ou équipement électronique permettant d'échanger des données avec un serveur distant. Cette unité client peut se présenter sous des formes très variées. Il peut s'agir d'un poste fixe de type (PC) ou d'une station informatique fixe, ou encore d'une unité mobile, de type téléphone portable ou similaire.

Dans le domaine de l'authentification électronique d'un utilisateur, les méthodes connues d'authentification peuvent être classées en deux catégories principales : celle regroupant les méthodes d'authentification de type statique, et celle regroupant les méthodes d'authentification de type dynamique.

La catégorie des méthodes d'authentification statique regroupe toutes les méthodes d'authentification qui sont basées sur la mise en oeuvre d'un ensemble de mots de passe préenregistrés (par exemple dans une base de données utilisateurs du serveur d'authentification), chaque mot de passe étant attribué spécifiquement à un utilisateur donné. A cet effet, à chaque utilisateur autorisé est attribué un identifiant qui lui est spécifique, et dans l'ensemble des mots de passes préenregistrés, chaque mot de passe est associé à un identifiant donné. Lors d'une procédure d'authentification, au moyen d'une unité client, l'utilisateur envoie au serveur d'authentification son identifiant et son mot de passe, qui est de préférence crypté. Le serveur d'authentification vérifie la validité du mot de passe reçu, en le comparant au mot de passe qui est associé à l'identifiant reçu dans l'ensemble de mots de passe préenregistrés. En cas de cohérence entre les deux mots de passe, l'authentification est validée. Cette méthode d'authentification statique est la plus répandue à ce jour, et est en particulier couramment mise en oeuvre sur les réseaux informatiques de type LAN.

Les méthodes d'authentification dynamique sont apparues postérieurement aux méthodes d'authentification statique. Ces méthodes se caractérisent essentiellement par la succession d'étapes suivantes. Lorsque le serveur d'authentification reçoit une demande d'authentification émise par une unité client (utilisateur), ledit serveur génère un nombre aléatoire (encore appelé « challenge) et envoie ce nombre aléatoire à ladite unité client, laquelle en retour crypte ce nombre aléatoire selon une méthode de cryptage prédéfinie. Il peut s'agir d'un algorithme symétrique, tel que DES («Data Encryption Standard »), 3DES, RC4,... ou d'un algorithme de type asymétrique, reposant sur une infrastructure de clef publique, communément désignée PKI, et utilisant une clef publique connue de tous et une clef privée confidentielle. Les exemples les plus répandus d'algorithmes asymétriques à clef publique sont les algorithmes RSA (Rivest-Shamir-Adleman), Diffie-Hellman, ElGamal, etc.... Après cryptage, ladite unité client renvoie le nombre aléatoire crypté au serveur d'authentification. Ce dernier décrypte le nombre aléatoire crypté qui lui est renvoyé, et en cas de cohérence avec le nombre aléatoire qu'il avait initialement émis, valide l'authentification. La validation de l'authentification se traduit par exemple par l'envoi, par le serveur d'authentification, à destination de l'unité client qui a été authentifiée, d'un jeton temporaire (encore appelé « token ») qui contient tous les droits d'accès de ladite unité.

La mise en oeuvre d'une méthode d'authentification dynamique permet certes d'obtenir un niveau de sécurité contre les fraudes plus élevé que celui obtenu avec une méthode d'authentification statique précitée. Cependant sa mise en oeuvre sur un réseau existant qui serait basé initialement sur une méthode d'authentification statique, oblige à modifier complètement le réseau, et notamment à changer le système d'exploitation à la base du fonctionnement du réseau. Ainsi, plutôt que de remplacer une méthode d'authentification statique par une méthode d'authentifications dynamique, on a déjà proposé par le passé différentes solutions permettant de fiabiliser les méthodes d'authentification statique.

Une première solution pour fiabiliser une méthode d'authentification statique consiste à modifier périodiquement et automatiquement, l'ensemble des mots de passe préenregistrés. Cependant, entre deux mises à jour, le problème de piratage des mots de passe statiques reste entier. L'efficacité de cette méthode dépend en conséquence de la fréquence de mise à jour dés mots de passes statiques. Egalement, plus le nombre d'utilisateurs est important, plus le nombre de mots de passes statique devant être modifié à chaque mise à jour est important, ce qui limite l'intérêt de cette méthode.

Une autre solution pour fiabiliser une méthode d'authentification statique consiste d'une manière générale à mettre en oeuvre une couche sécurité supplémentaire, distincte de la procédure d'authentification statique. Lors d'une procédure d'authentification, une première authentification est assurée par cette couche sécurité supplémentaire. Si cette première authentification est réussie, la procédure d'authentification statique usuelle est alors mise en oeuvre.

Différentes méthodes d'authentification peuvent être utilisées pour réaliser la couche sécurité supplémentaire précitée. Par exemple, une méthode connue, et couramment utilisée, est basée sur une authentification synchrone. Différentes variantes de mise en oeuvre d'une authentification synchrone ont été proposées notamment dans les brevets US-A-4,720,860, US-A-5,887,065, FR-A-2747814 et WO-A- 9918546. Une authentification synchrone se caractérise d'une manière générale par la mise en oeuvre des étapes suivantes. A chaque procédure d'authentification d'un utilisateur, l'unité client de l'utilisateur génère automatiquement un mot de passe à usage unique, qui est calculé notamment à partir d'un paramètre tempore fourni par l'horloge de cette unité, et également à partir d'une clef statique propre à l'utilisateur. Ce mot de passe à usage unique est transmis au serveur d'authentification, qui parallèlement calcule de manière similaire mot de passe, à partir de sa propre horloge. L'authentification est réalisée par le serveur par comparaison et vérification de la cohérence du mot de passe à usage unique qui lui a été transmis avec le mot de passe qu'il a calculé. Cette méthode est intéressante, car à chaque authentification un mot de passe à usage unique est utilisé pour l'authentification, ce qui réduit les risques de fraudes. En revanche, elle présente l'inconvénient de nécessiter une synchronisation des horloges de l'unité client et du serveur d'authentification.

On connaît par ailleurs, du brevet US-A-4,672,533, un procédé d'authentification de type statique, dans lequel l'authentification de l'utilisateur est réalisée via un terminal comportant un module de contrôle d'accès à un ordinateur distant. Ce module fonctionne selon deux modes distincts.

Dans le premier mode de fonctionnement, le terminal envoie, via le module de contrôle, un identifiant de terminal TID à l'ordinateur distant. Celui-ci récupère alors dans une table T un code dit de couplage CC associé à l'identifiant TID qu'il a reçu. L'ordinateur distant génère ensuite un code de contrôle spécial ou SCC et l'envoie au module de contrôle. Le module de contrôle, après réception du code SCC, renvoie à l'ordinateur distant le code CC associé dans sa mémoire au code SCC. L'ordinateur distant compare alors le code CC reçu avec celui qu'il a récupéré dans la table à l'une des étapes précédentes. Si les deux codes CC sont identiques, l'accès au terminal est autorisé.

Le second mode de fonctionnement, dit mode de contrôle, est activé par l'ordinateur distant avant la fin d'une session de communication entre le terminal et l'ordinateur distant, par envoie d'un second code de contrôle de l'ordinateur distant au module de contrôle. Le module de contrôle génère alors de façon incrémentale un nouveau code CC aléatoire. Ce nouveau code, généré avant chaque fin de session, est d'une part stocké en mémoire du module de contrôle, et d'autre part envoyé à l'ordinateur distant pour être stocké dans la table T.

Les principaux inconvénients de ce type de procédé sont qu'il s'agit là encore d'un procédé synchronie, que le nouveau mot de passe est généré en fin de session de communication pour usage lors de la session de communication suivante. Il impose donc de stocker le nouveau code au niveau du client et augmente les possibilités d'utilisation frauduleuse. Notamment si le nouveau mot code est intercepté, le temps d'utilisation frauduleuse potentielle peut être très important puisque le nouveau code est actif jusqu'à la fin de la session suivante.

L'invention se situe dans le domaine de l'authentification statique, c'est-à-dire des méthodes d'authentification reposant sur la mise en oeuvre d'un ensemble de mots de passes préenregistrés. Dans ce domaine, elle propose un perfectionnement qui permet d'améliorer la sécurité contre les fraudes d'une procédure d'authentification statique.

L'invention a ainsi pour objets principaux un système électronique d'authentification d'un utilisateur qui présente les caractéristiques de la revendication 1, et un procédé d'authentification d'un utilisateur qui présente les caractéristiques de la revendication 10.

L'invention permet avantageusement de rendre pseudo-dynamique l'ensemble des mots de passes préenregistrés, puisque qu'à chaque authentification, le mot de passe statique de l'utilisateur est préalablement modifié, ce qui permet d'accroître la sécurité contre les fraudes.

D'autres caractéristiques et avantages de l'invention apparaîtront plus clairement à la lecture de la description ci-après d'une variante de réalisation de l'invention, laquelle description est donnée à titre d'exemple non limitatif, et en référence aux dessins annexés sur lesquels :
- la figure 1 est un synoptique général d'une variante préférée de réalisation d'un système d'authentification de l'invention, laquelle variante est basée sur l'utilisation d'une carte à microprocesseur, en combinaison avec la mise en oeuvre d'un algorithme de cryptage asymétrique,
- La figure 2 représente les principales étapes de la procédure initiale d'authentification du porteur de la carte à microprocesseur, lesquelles étapes sont mises en oeuvre en local au niveau de l'unité client (utilisateur),
- La figure 3 représente les principale étapes ainsi que les principales données qui sont générées et/ou échangées au cours d'une procédure d'authentification conforme à l'invention.

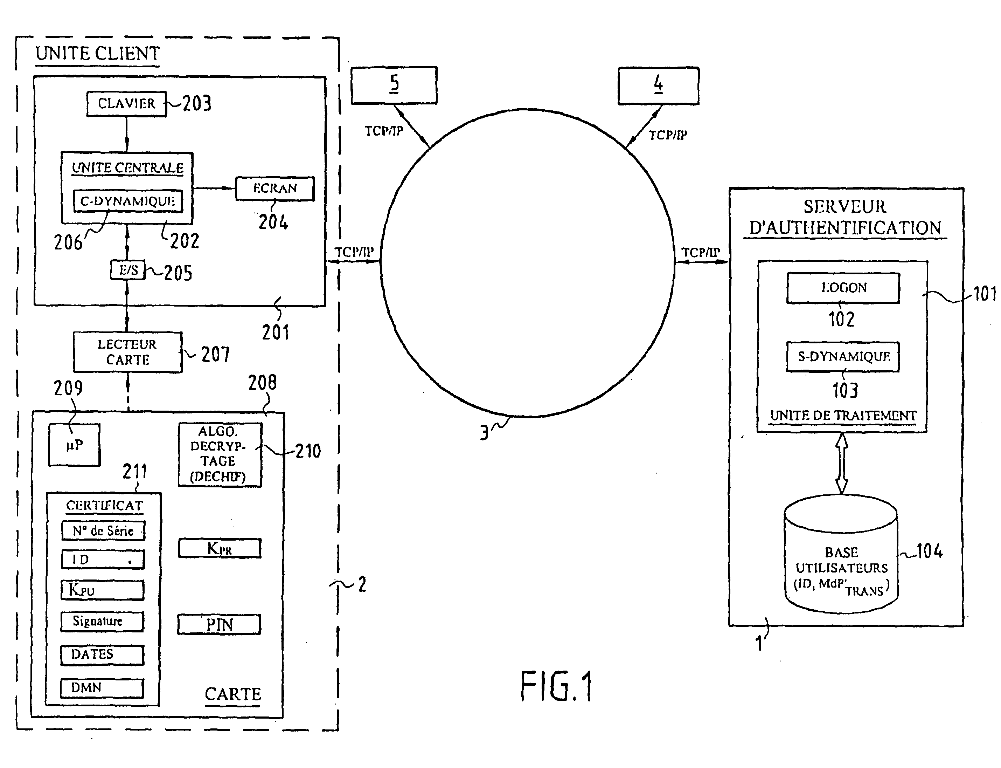

En référence à la figure 1, le système d'authentification de l'invention comporte une unité d'authentification 1, désignée ci-après serveur d'authentification, et au moins une unité client 2 apte à échanger à distance des données avec le serveur d'authentification 1, via un réseau local 3. Dans l'exemple particulier illustré, le réseau 3 est un réseau local de type LAN. et l'échange de données sur ce réseau 3 utilise le protocole de communication TCP/IP. Cependant, le type de réseau et le protocole de communication utilisé pour l'échange des données entre le serveur d'authentification 1 et l'unité client 2 sont sans importance pour l'invention. L'invention pourrait notamment être mise en oeuvre sur un réseau de type WAN, et/ou avec un autre protocole de communication.

Dans l'exemple particulier illustré sur la figure 1, sur le réseau 3, sont également connectés deux autres serveurs, tel que par exemple un serveur de messagerie 4, encore désigné serveur de courrier électronique, et un serveur de fichiers 5. Le système d'authentification qui va a présent être décrit en détail permet à un utilisateur donné, au moyen de l'unité client 2, d'adresser une demande d'authentification au serveur 1. Dans l'hypothèse où l'authentification de l'utilisateur est acceptée par le serveur 1 (demande d'authentification émise par un utilisateur autorisé), une session est ouverte sur le réseau 3, ce qui permet, après authentification, à l'utilisateur autorisé d'accéder, également en utilisant l'unité client 2, et en en fonction de l'étendue de ses droits d'accès, à tout ou partie des « fonctions informatiques » du réseau.

### Serveur d'authentification (1)

Le serveur d'authentification 1 comprend essentiellement une unité de traitement programmable 101 et une base utilisateurs 104. Dans l'exemple de la figure 1, ce serveur 1 fait également office de contrôleur de domaine, et de ce fait est autorisé à modifier les données de la base utilisateur 104. Les aspects relatifs à la gestion du fonctionnement du réseau et des noms de domaines du réseau sont par ailleurs connus et sans importance pour la compréhension de l'invention. En conséquence, dans la suite de la description, par soucis de simplification de l'exposé, ces aspects techniques annexes liés purement à la gestion du fonctionnement du réseau ne seront donc pas décrits.

Pour la mise en oeuvre de l'invention, l'unité de traitement 101 du serveur d'authentification 1 est conçue pour principalement exécuter deux modules logiciels 102 et 103 désignés respectivement « LOGON » et « S-DYNAMIQUE » sur la figure 1.

De manière usuelle, la base utilisateurs 104 comporte en mémoire un ensemble de mots de passe préenregistrés (MdP'_{TRANS}), chaque mot de passe étant associé à un identifiant (ID) qui caractérise un utilisateur, un identifiant spécifique étant attribué à chaque utilisateur autorisé. De préférence, chaque mot de passe (MdP'_{TRANS}) stocké dans la base utilisateur est un mot de passe complexe obtenu de manière usuelle par transformation (par exemple par hachage) d'un mot de passe initial (MdP'), ce qui rend les fraudes plus difficiles. Néanmoins dans une autre variante, la base utilisateurs pourrait contenir les mots de passe en « clairs » (MdP'). La base utilisateur 104 est de préférence implémentée sous la forme d'une base de données interrogeable par l'unité de traitement 1, et permettant, après envoi par l'unité de traitement 1 d'une requête avec notamment comme paramètre un identifiant (ID) donné, et en fonction du type de requête, de renvoyer à l'unité de traitement 1 (lecture) ou de modifier (écriture) le mot de passe (MdP'_{TRANS}) associé à l'identifiant (ID). Cette mise en oeuvre préférée n'est toutefois pas limitative de l'invention. Dans une autre forme de réalisation, la base utilisateur pourrait se présenter sous la forme d'une table ou d'un fichier séquentiel.

### Unité client (2)

Dans l'exemple préféré de réalisation de la figure 1, une unité client comprend une station (ou poste) informatique 201 fixe, de type ordinateur personnel ou similaire. L'invention n'est toutefois pas limitée à la mise en oeuvre d'une station fixe; dans une autre application, l'unité client pourrait être de type portable et/ou mobile.

Plus particulièrement, pour faire fonctionner une station 201, il est nécessaire d'utiliser une carte 208 amovible à microprocesseur (plus communément appelée carte à puce).

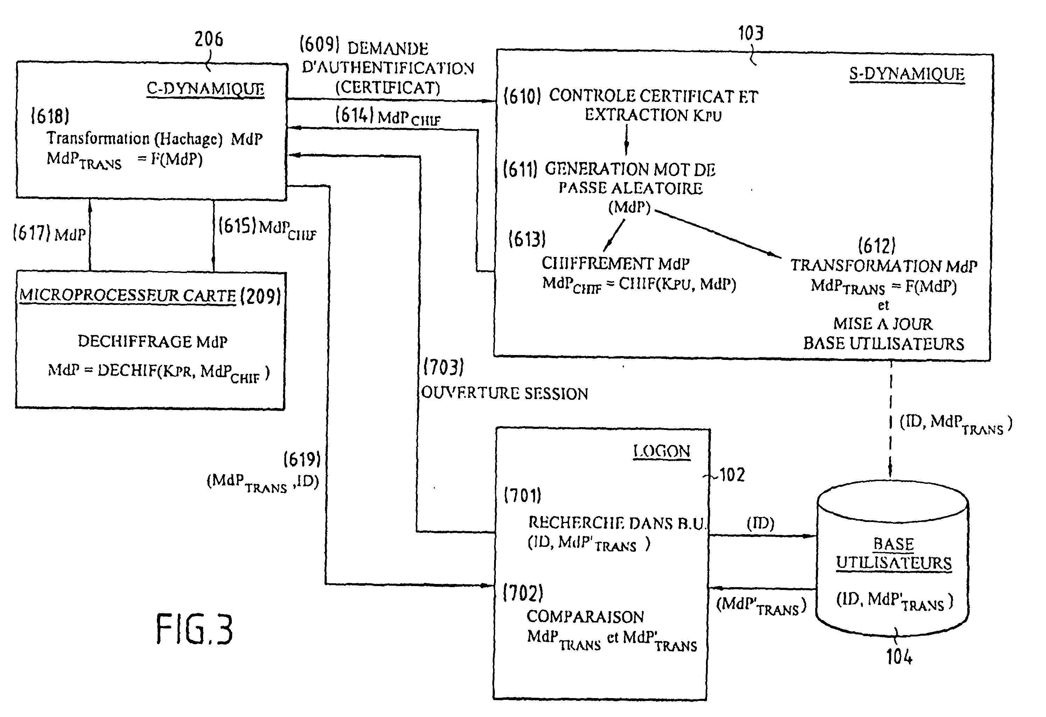

La station fixe 201 comprend de manière usuelle une unité centrale 202, un clavier 203, et un écran 204. Pour la mise en oeuvre de la procédure d'authentification de l'invention, l'unité centrale 202 est programmée pour exécuter un module logiciel 206, désigné « C-DYNAMIQUE » sur les figures 1 et 3. L'unité client 2 comporte également un lecteur 207 qui est connecté à un port d'entrée/sortie 205 de l'unité centrale 202, et qui permet à l'unité centrale 202 de dialoguer avec une carte à microprocesseur 208 insérée dans le lecteur 207.

En pratique, chaque utilisateur autorisé à ouvrir une session sur le réseau ( c'est-à-dire d'une manière plus générale susceptible d'être authentifié par le système de l'invention), est détenteur d'une carte 208, qui a été paramétrée en sorte de lui être spécifique, et qu'il doit insérer dans le lecteur 207 d'une unité client 2 pour pouvoir se faire authentifier automatiquement par le système de l'invention.

### Carte (208) à microprocesseur

Un exemple préféré de carte 208 à microprocesseur va a présent être détaillé.

Une carte 208 comporte de manière usuelle un microprocesseur 209 cadencé par une horloge (non représentée), et de la mémoire volatile et réinscriptible, telle que par exemple EEPROM,...

Dans la mémoire de la carte 208 est stocké un programme résident permettant de faire fonctionner le microprocesseur 209, et comportant notamment un module logiciel 210. Ce module 210 permet d'une manière générale d'exécuter un algorithme de décryptage (ou déchiffrement). Dans une variante de réalisation de l'invention, il pourrait s'agir d'un algorithme symétrique, type algorithme DES. De préférence, dans l'exemple illustré et décrit ci-après, il s'agit d'un algorithme asymétrique type RSA basé sur un bi-clef (K_{PR}, K_{PUB}), dans lequel K_{PR} est une clef privée confidentielle propre à un utilisateur et K_{PUB} est une clef publique utilisée également par le serveur d'authentification 1 pour le cryptage des mots de passe.

Dans la mémoire de la carte 208 sont également sauvegardés plusieurs paramètres, dont les principaux sont un code « PIN » confidentiel, un certificat numérique 211, et la clef privée K_{PR} (confidentielle et non lisible). De manière usuelle dans le domaine des algorithmes de chiffrement/déchiffrement asymétriques, le certificat numérique 211 est généré à partir de la clef publique (K_{PUB}), et comprend comme principaux champs : un numéro de série identifiant le certificat 211, un identifiant (ID) de l'utilisateur de la carte , la clef publique (K_{PUB}), un nom de domaine (DMN), les dates de validité (DATES) et une signature de l'ensemble des champs présents dans le certificat numérique.

### Module « LOGON » 102 et art antérieur

Le module « LOGON » 102 précité, exécutable par le serveur d'authentification 1, est un module logiciel connu en soit. Lorsqu'il est activé, ce module 102 réalise de manière usuelle une procédure d'authentification statique simple (figure 3 / étapes 701 et 702), à partir d'un identifiant (ID) et d'un mot de passe (MdP_{TRANS}) qui lui sont soumis en entrée, et en cas d'authentification validée, ce module «LOGON » ouvre une session sur le réseau pour l'utilisateur autorisé qui a été authentifié (figure 3/ étape 703). En substance, la procédure d'authentification statique simple (figures 3 / Etapes 701 et 702) exécutée par ce module 102 consiste à comparer le mot de passe (MdP_{TRANS}) soumis en en entrée à ce module 102, avec le mot de passe (MdP'_{TRANS}) qui est associé dans la base utilisateur 104 à l'identifiant (ID) également soumis en entrée par le module 102, et à valider ou au contraire à rejeter l'authentification selon qu'il y a ou non cohérence entre les deux mots de passe (MdP_{TRANS}) et (MdP'_{TRANS}).

Dans la plupart des systèmes d'authentification statiques connus à ce jour, le déclenchement par un utilisateur d'une procédure d'authentification, au moyen d'une unité client, se traduit d'emblée par l'envoi par l'unité client, à destination du serveur d'authentification, d'un couple (ID, MdP_{TRANS}), et par l'activation du module « LOGON » 102 pour l'exécution de la procédure d'authentification statique simple précitée.

L'invention permet de renforcer la sécurité contre les fraudes de cette authentification simple, en réalisant, lors de chaque authentification, une procédure d'authentification supplémentaire et préalable, qui est fortement sécurisée, et qui se traduit d'une manière générale par la génération, à chaque authentification, d'un nouveau d'un mot de passe à usage unique, et par une mise à jour dynamique de la base utilisateurs 104 avec ce nouveau mot de passe.

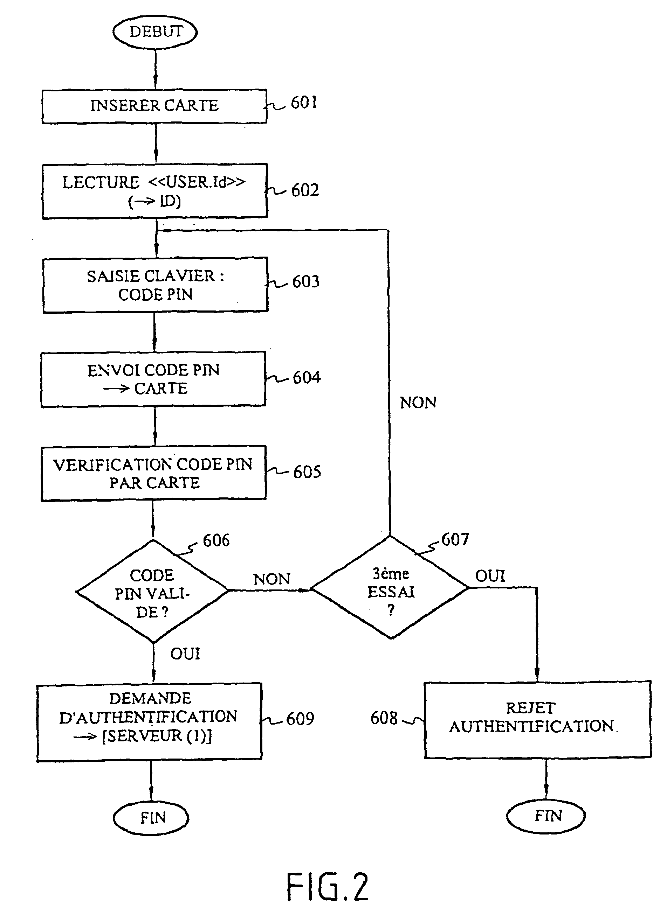

Dans l'exemple particulier de réalisation du système d'authentification de l'invention qui est illustré sur les figures annexée, cette procédure d'authentification supplémentaire et préalable, caractéristique de l'invention, s'appuie sur la mise en oeuvre des deux modules logiciels 102 (« S-DYNAMIQUE » ) et 206 (« C-DYNAMIQUE) précités, et sur l'utilisation de la carte à microprocesseur 208 précitée. Un exemple particulier de déroulement de cette procédure d'authentification caractéristique de l'invention va à présent être détaillé en référence aux figures 2 et 3. Dans cet exemple, cette procédure se déroule en deux phases successives principales : une première phase d'authentification du porteur de la carte 208, illustrée par les étapes de l'organigramme de la figure 2, et une deuxième phase représentée par le diagramme de la figure 3.

### Figure 2/1^{ère} phase : Authentification porteur

Etape 601 : Initialement, le module « C-DYNAMIQUE » de l'unité client 2 affiche sur l'écran 204 un message demandant à l'utilisateur d'insérer sa carte 208 dans le lecteur 207.
Etape 602 : Une fois la carte 208 insérée, le module « C-DYNAMIQUE » déclenche une opération de lecture de l'identifiant (ID) stocké dans la mémoire de la carte qui a été inséré, et récupère ainsi cet identifiant (ID), ce qui évite une saisie manuelle de cet identifiant (ID) par l'utilisateur.
Etape 603 : Une fois l'identifiant (ID) récupéré, le module « C-DYNAMIQUE » affiche un message sur l'écran 204 demandant à l'utilisateur d'entrer son code PIN.
Etape 604 : Une fois que l'utilisateur a saisi et validé au moyen du clavier 203 son code PIN , le module « C-DYNAMIQUE » envoie le code PIN saisi au microprocesseur 209 de la carte 208.
Etape 605 : le microprocesseur 209, après réception du code saisi, déclenche une opération de vérification de ce code par comparaison avec le code PIN enregistré dans la mémoire de la carte 208.
Tests 606 et 607 :
   Si les codes ne sont pas identiques, le microprocesseur 209 de la carte informe le module « C-DYNAMIQUE » de l'unité client 2 que la tentative d'authentification du porteur a échoué, et l'utilisateur se voit offert la possibilité par le module « C-DYNAMIQUE de recommencer la saisie de son code PIN un nombre limité de fois ( au nombre de trois dans l'exemple de la figure 2). Après la troisième tentative infructueuse (traduisant la saisi d'un code PIN erroné par l'utilisateur), la procédure d'authentification est rejetée ( Etape 608), et le microprocesseur 209 effectue un verrouillage logiciel de la carte 208, en sorte de la rendre inutilisable.
   Si le code saisi par l'utilisateur est identique au code PIN stocké dans la carte (test 606 positif), le microprocesseur 209 de la carte informe le module « C-DYNAMIQUE » de l'unité client 2 que l'authentification du porteur de la carte a réussi, et le module « C-DYNAMIQUE » déclenche une demande d'authentification (démarrage de la deuxième phase précitée) à destination du serveur d'authentification 1.
Etape 609 : Dans le cadre de cette demande d'authentification, le module « C-DYNAMIQUE » récupère préalablement dans la carte 208 le certificat numérique 211 et transmet ce certificat au serveur d'authentification 1.

### Figure 3 / 2^{ème} phase : traitement d'une demande d'authentification

Sur la figure 3, on retrouve l'étape 609 (demande d'authentification) de la figure 2, et les étapes subséquentes de la deuxième phase sont numérotées de (610) à (619)
La demande d'authentification reçue par le serveur d'authentification 1 est traitée initialement par le module « S-DYNAMIQUE ».
Etape 610 : Le module « S-DYNAMIQUE » effectue un contrôle de la validité du certificat numérique 211 (notamment vérification de la période de validité du certificat numérique et vérification si ce certificat n'a pas été révoqué de manière anticipée). L'opération de contrôle de la validité d'un certificat numérique est par ailleurs connue en soit et ne sera donc pas plus amplement décrite. En cas de non validité du certificat, la demande d'authentification est rejetée. En cas de validité du certificat numérique, le module « S-DYNAMIQUE » extrait la clef publique (K_{PUB}) de ce certificat en vue de l'utiliser ultérieurement pour l'opération de cryptage ( Etape 613 ci-après) du mot de passe à usage unique généré à l'étape (611) suivante.
Etape 611 : le module « S-DYNAMIQUE » génère automatiquement et de manière connue en soit un mot de passe aléatoire ou pseudo-aléatoire (MdP), de préférence de longueur importante afin d'augmenter le niveau de sécurité contre les fraudes. Ce mot de passe (MdP) est un mot de passe à usage unique et temporaire (mot de passe utilisé uniquement pendant la procédure d'authentification en cours).
Etape 612 : Le module « S-DYNAMIQUE » transforme le mot de passe MdP (par exemple selon une méthode connue dite de hachage) et met à jour la base utilisateur 104 avec le mot de passe MdP_{TRANS} (encore appelé « hash »du mot de passe MdP) issue de cette transformation.
   Dans une autre variante, la transformation du mot de passe MdP pourrait être réalisée par un module logiciel distinct du module « S-DYNAMIQUE », et intégré par exemple au système d'exploitation de l'unité client 2.
   La mise à jour précitée de la base utilisateurs 104 consiste à remplacer dans cette base 104 le mot de passe MdP'_{TRANS} qui est associé à l'identifiant (ID) du certificat numérique, par le nouveau mot de passe MdP_{TRANS}. Le but de la transformation précitée est d'augmenter la sécurité du système, en stockant dans la base utilisateur des mots de passe qui ne sont pas directement exploitables. Cette étape de transformation est préférentielle, mais n'est pas nécessaire, le système d'authentification de l'invention pouvant également être mis en oeuvre avec une base utilisateurs stockant et mise à jour directement avec chaque nouveau mot de passe MdP généré en « clair ».
Etape 613 : Le module « S-DYNAMIQUE » crypte le mot de passe (MdP) au moyen de la clef publique K_{PUB} extraite précédemment du certificat à l'étape (610), et en utilisant un algorithme asymétrique prédéfini, tel que par exemple un algorithme RSA, qui correspond à l'algorithme de décryptage (210) de la carte (208).
Etape 614: Le mot de passe crypté (MdP_{CHIF}) est transmis au module «C-Dynamique» de l'unité client 2 qui a émis la demande d'authentification.
Etape 615: Le module «C-Dynamique» transmet le mot de passe crypté (MdP_{CHIF}) au microprocesseur 209 de la carte 208 insérée dans le lecteur 207.
Etape 616: Le microprocesseur 209 de la carte décrypte le mot de passe crypté (MdP_{CHIF}) au moyen de l'algorithme asymétrique 210, et en utilisant la clef privé K_{PR} stockée dans la carte.
Etape 617 : Le mot de passe (MdP) qui a été décrypté est envoyé au module « C-Dynamique » de l'unité client 2.
Etape 618 : Le module « C-Dynamique » transforme le mot de passe (MdP), en appliquant sur ce mot de passe la même fonction de transformation que celle utilisée par le module « S-DYNAMIQUE » à l'étape (612) précitée. Dans une autre variante, la transformation du mot de passe MdP pourrait être réalisée par un module logiciel distinct du module « C-DYNAMIQUE », et intégré par exemple au système d'exploitation du serveur d'authentification 1.
Etape 619: Le module «C-Dynamique» envoie au serveur d'authentification 1, le mot de passe (MdP_{TRANS}) issu de l'étape 618 précédente, ainsi que l'identifiant (ID) en vue de leur traitement par le module « LOGON » 102 précité qui est connu et qui met en oeuvre les étapes usuelles (701 à 703) de la procédure de LOGON précédemment décrite (voir supra : Module « LOGON » 102 et art antérieur).

On comprend à la lumière de la description précitée que d'une manière générale, dans la procédure d'authentification de l'invention, la sécurité de l'authentification est augmentée, du fait de l'utilisation d'un mot de passe temporaire à usage unique, qui est généré et mis à jour dans la base utilisateurs à chaque nouvelle authentification, et qui est envoyé à l'unité client via un canal sécurisé (cryptage du mot de passe MdP avant envoi à l'unité client / décryptage du mot de passe par l'unité client), en vue d'être utilisé par cette unité client pour son authentification.

En fin de session sur le réseau, l'utilisateur retire sa carte 208 du lecteur 207. Le module « C-DYNaMIQUE » de l'unité client détecte ce retrait de la carte, et informe de manière usuelle le serveur 1 de cette fin de session, qu déclenche une procédure usuelle de clôture de session réseau (déconnexion de l'utilisateur).

Selon une autre caractéristique additionnelle de l'invention, en fin de session, le module « S-DYNAMIQUE » réitère les étapes 611 et 612 précitée, afin de remplacer dans la base utilisateur 104 le mot de passe à usage unique utilisé au cours de la session, par un nouveau mot de passe. Cette caractéristique additionnelle permet d'augmenter la sécurité du système d'authentification, pour le cas où un fraudeur aurait réussi pendant la durée de la session, à capter le mot de passe MdP_{TRANS} transmis par l'unité client au serveur d'authentification (étape 619) et à retrouver le mot de passe d'origine (MdP).

Plus particulièrement, la variante préférée de réalisation qui a été décrite en référence au figures 1 à 3 annexées présente de nombreux avantages supplémentaires, dont les principaux sont énoncés ci-après.

L'utilisation d'une carte 208 amovible apporte avantageusement une mobilité pour l'utilisateur.

La sécurité du système d'authentification est augmentée par le fait que :
- le cryptage/décryptage des mots de passe repose sur un algorithme asymétrique ;
- l'algorithme qui permet le décryptage (figure 1 / module 210) de chaque nouveau mot de passe reçu par une unité client est déporté sur la carte amovible (208) et n'est pas accessible en mémoire de la station 201 de l'unité client ;
- la clef privée (K_{PR}) qui est confidentielle et propre à un utilisateur donné n'est jamais transmise ou générée à l'extérieur de la carte ;
- pour débloquer la fonction de décryptage, le porteur de la carte doit être préalablement authentifié, au moyen d'un code PIN confidentiel qui est stocké sur la carte, et qui n'est jamais transmis à l'extérieur de la carte, la fonction de contrôle du code PIN entré par l'utilisateur étant déportée sur la carte ;
- La validité du certificat numérique est contrôlé par le serveur d'authentification, ce qui permet notamment, en cas de suspicion de fraude d'un certificat, de révoquer de manière anticipée ce certificat au niveau du serveur d'authentification.
   Egalement, un autre avantage de l'invention réside dans le fait qu'elle peut facilement et rapidement être mise en oeuvre sur un réseau existant mettant initialement en oeuvre une procédure d'authentification simple (tel que les étapes 701 à 703 précitées), la procédure de « LOGON » n'étant pas modifiée.

L'invention n'est pas limitée à la variante préférée de réalisation qui a été décrite ci-dessus en référence aux figures 1 à 3. En particulier, le module logiciel (« S-DYNAMIQUE ») n'est pas nécessairement implémenté sur le même serveur que le module »LOGON » (c'est-à-dire sur le serveur d'authentification 1), mais pourrait être déporté sur une autre machine connectée au réseau 3 et pouvant dialoguer avec le serveur d'authentification. Dans cette autre variante, deux cas de figures peuvent se présenter : (i) Cette machine implémentant et faisant fonctionner le module logiciel (« S-DYNAMIQUE ») est autorisée à accéder et à modifier directement la base utilisateur 104 (configuration appropriée des droits d'accès de cette machine par l'administrateur réseau), auquel cas la mise à jour de la base utilisateurs pourra être effectuée directement par le module (« S-DYNAMIQUE ») ; (ii) Cette machine n'a pas le droit de lire et/ou de modifier la base utilisateurs 104, auquel cas la mise à jour de la base utilisateurs avec le nouveau mot de passe à usage unique généré par le module (« S-DYNAMIQUE ») sera réalisée indirectement en passant par le serveur 1 qui possède les droits d'accès nécessaires.

D'une manière plus générale, on pourra réaliser un système d'authentification basé sur l'utilisation, -aux lieu et place de la carte à microprocesseur 208 précédemment décrite-, de tout support mémoire amovible qui est apte à être positionné dans une unité client 2, et qui, une fois positionné dans une unité client 2, peut échanger des données avec ladite unité client. Lorsqu'un tel support mémoire comporte uniquement de la mémoire et ne comporte pas de moyen de traitement de type microprocesseur ou similaire, les fonctions qui étaient assurées par le microprocesseur (notamment décryptage /contrôle de la validité du code PIN entré par l'utilisateur) seront assurées par l'unité centrale 202 de l'unité client 2, le support mémoire servant simplement à sauvegarder et à assurer la portabilité des principaux paramètres de fonctionnement (notamment code PIN, clef privée K_{PR}, certificat numérique 211). Egalement, de manière encore plus générale, un système d'authentification de l'invention ne met pas nécessairement en oeuvre de support mémoire amovible ; dans une autre variante de réalisation, toutes les données stockées sur la carte 208 précédemment décrite, et toutes les fonctionnalités assurées par cette carte 208, peuvent en effet ne pas être déportées, mais au contraire résider dans la station 201 (unité client 2), les données étant stockée par exemple sur un support mémoire de masse de l'unité centrale 202, type disque dur, et les fonctionnalités (programmes) pouvant être stockées en mémoire vive (RAM) de l'unité centrale 202.

## Revendications

1. Système d'authentification d'un utilisateur, ledit système comportant au moins une unité client (2), qui permet à un utilisateur de déclencher une procédure d'authentification, et une unité d'authentification (1), qui comprend un ensemble de mots de passe préenregistrés (MdP'), chaque mot de passe de cet ensemble étant associé à un identifiant (ID), l'unité client (2) permettant, au cours d'une procédure d'authentification, d'envoyer à l'unité d'authentification (1) un identifiant (ID) et un mot de passe (MdP), l'unité d'authentification (1) ayant pour fonction, au cours d'une procédure d'authentification, de contrôler la validité d'un mot de passe MdP) adressé par une unité client en vérifiant la cohérence entre le mot de passe reçu et le mot de passe (MdP') qui, dans l'ensemble des mots de passe préenregistrés, est associé à l'identifiant (ID) reçu, **caractérisé en ce qu'**il comprend en outre des moyens d'authentification dynamique (103) qui, lors de chaque procédure d'authentification déclenchée par une unité client (2), reçoivent l'identifiant (ID) de l'utilisateur, et :
(a) génèrent automatiquement un nouveau mot de passe à usage unique (MdP),
(b) remplacent dans l'ensemble des mots de passe préenregistrés, le mot de passe (MdP') associé à l'identifiant (ID) reçu, par le nouveau mot de passe à usage unique (MdP) qui a été généré ou par un mot de passe (MdP _{TRANS}) qui en est dérivé,
(c) cryptent le nouveau mot de passe à usage unique (MdP) qui a été généré, et transmettent, à ladite unité client (2), le mot de passe crypté à usage unique (MdP_{CHIF}),
et **en ce que** ladite unité client (2) est conçue pour, après réception du nouveau mot de passe crypté à usage unique (MdP_{CHIF}), décrypter ledit mot de passe, et transmettre au moins le mot de passe décrypté (MdP) ou un mot de passe (MdP_{TRANS}) qui en est dérivé, à l'unité d'authentification (1), en vue du contrôle de la validité de ce mot passe par ladite unité d'authentification.

2. Système selon la revendication 1 **caractérisé en ce que** pour son fonctionnement une unité client (2) comprend au moins un support mémoire amovible (208).

3. Système selon la revendication 2 **caractérisé en ce que** le support mémoire (208) est apte à assurer la fonction de décryptage d'un mot de passe crypté (MdP_{CHIF}).

4. Système selon la revendication 2 ou 3 **caractérisé en ce que** chaque support mémoire est une carte à microprocesseur (208).

5. Système selon l'une des revendications 1 à 4 **caractérisé en ce que** pour réaliser le cryptage et le décryptage de mot de passe, les moyens d'authentification dynamique (103) et l'unité client (2) utilisent un algorithme asymétrique.

6. Système selon les revendications 3 et 5 **caractérisé en ce que** l'algorithme de cryptage/décryptage asymétrique utilise un bi- clef (K_{PUB}, K_{PR}), K_{PUB} étant une clef publique, et K_{PR} étant une clef privée, et **en ce que** la clef privée (K_{PR}) est stockée en mémoire dans le support amovible (208).

7. Système selon la revendication 6 **caractérisé en ce que** chaque support amovible (208) comporte en mémoire un certificat numérique (211) comportant plusieurs champs dont notamment l'identifiant (ID) de l'utilisateur, la clef publique (K_{PUB}), et une signature de l'ensemble des champs du certificat, **en ce que** l'unité client (2) est conçue pour, en cours de procédure d'authentification d'un utilisateur, récupérer le certificat numérique (211) stocké dans le support amovible (208) qui est positionné dans l'unité client (2), et pour transmettre ledit certificat aux moyens d'authentification dynamique (103), et **en ce que** les moyens d'authentification dynamique (103) sont aptes à contrôler la validité d'un certificat qui lui est envoyé par une unité client (2).

8. Système selon l'une des revendications 1 à 7 **caractérisé en ce que** chaque support mémoire (208) est paramétré avec un identifiant (ID) qui caractérise l'utilisateur.

9. Système selon l'une des revendications 1 à 6 **caractérisé en ce que** chaque support amovible (208) est paramétré avec un code « PIN » prédéfini, et est conçu pour effectuer, au cours d'une phase préalable dite « d'authentification porteur », une comparaison de ce code PIN prédéfini avec un code entré par l'utilisateur dans l'unité client (2).

10. Procédé d'authentification d'un utilisateur au moyen d'un système d'authentification comportant au moins une unité client (2), qui permet à un utilisateur de déclencher le procédé d'authentification, et une unité d'authentification (1), qui comprend un ensemble de mots de passe préenregistrés (MdP'), chaque mot de passe de cet ensemble étant associé à un identifiant (ID), l'unité client (2) permettant, au cours du procédé d'authentification, d'envoyer à l'unité d'authentification (1) un identifiant (ID) et un mot de passe (MdP), l'unité d'authentification (1) ayant pour fonction, au cours du procédé d'authentification, de contrôler la validité d'un mot de passe (MdP) adressé par une unité client en vérifiant la cohérence entre le mot de passe reçu et le mot de passe (MdP) qui, dans l'ensemble des mots de passe préenregistrés, est associé à l'identifiant (ID) reçu, **caractérisé en ce que** le système d'authentification comprenant en outre des moyens d'authentification dynamique (103), l'unité client (2) envoie aux moyens d'authentification dynamique (103) l'identifiant (ID) de l'utilisateur, et après réception de cet identifiant (ID) les moyens d'authentification dynamique (103) :
(a) génèrent automatiquement un nouveau mot de passe à usage unique (MdP),
b) remplacent dans l'ensemblé des mots de passe préenregistrés, le mot de passe (MdP') associé à l'identifiant (ID) reçu, par le nouveau mot de passe à usage unique (MdP) qui a été généré ou par un mot de passe (MdP'_{TRANS}) qui en est dérivé,
c) cryptent le nouveau mot de passe à usage unique (MdP) qui a été généré, et transmettent, à ladite unité client (2), le mot de passe crypté à usage unique (MdP_{CHIF}),
et **en ce que** ladite unité client (2), après réception du nouveau mot de passe crytpé à usage unique (MdP_{CHIF}), décrypte ledit mot de passe, et transmet au moins le mot de passe décrypté (MdP) ou un mot de passe (MdP_{TRANS}) qui en est dérivé, à l'unité d'authentification (1), en vue du contrôle de la validité de ce mot de passe par ladite unité d'authentification.

## Patentansprüche

1. System zur Authentifizierung eines Benutzers, wobei das System mindestens
eine Clienteinheit (2), welche es einem Benutzer ermöglicht, ein Authentifizierungsverfahren auszulösen, und
eine Authentifizierungseinheit (1) aufweist, welche eine Einheit für voreingetragene Paßwörter (MdP') umfaßt, wobei jedes Paßwort dieser Einheit einem Identifikator (ID) zugeordnet ist,
wobei es die Clienteinheit (2) im Laufe des Authentifizierungsverfahrens ermöglicht, an die Authentifizierungseinheit (1) einen Identifikator (ID) und ein Paßwort (MdP) zu senden,
wobei die Authentifizierungseinheit (1) die Funktion hat, im Laufe eines Authentifizierungsverfahrens die Gültigkeit eines Paßwortes (MdP) zu überprüfen, welches von einer Clienteinheit stammt, indem die Übereinstimmung zwischen dem erhaltenen Paßwort und dem Paßwort (MdP') geprüft wird, welches in der Einheit für die voreingetragenen Paßwörter dem empfangenen Identifikator (ID) zugeordnet ist,
**dadurch gekennzeichnet,**
**daß** das System ferner Mittel zur dynamischen Authentifizierung (103) umfaßt, die bei jedem Authentifizierungsverfahren, das von einer Clienteinheit (2) ausgelöst worden ist, den Identifikator (ID) des Benutzers erhalten, und:
(a) automatisch ein neues Paßwort zu einmaliger Verwendung (MdP) erzeugen,
(b) in der Einheit für die voreingetragenen Paßwörter das Paßwort (MdP'), das dem erhaltenen Identifikator (ID) zugeordnet ist, durch das neue Paßwort zu einmaliger Verwendung (MdP), welches erzeugt worden ist, oder durch ein davon abgeleitetes Paßwort (MdP_{TRANS}) ersetzen,
(c) das neue Paßwort zu einmaliger Verwendung (MdP), das erzeugt worden ist, verschlüsseln und an die Clienteinheit (2) das verschlüsselte Paßwort zu einmaliger Verwendung (MdP_{CHIF}) übertragen, und
**daß** die Clienteinheit (2) so ausgelegt ist, daß sie nach dem Erhalten des neuen verschlüsselten Paßwortes zu einmaliger Verwendung (MdP_{CHIF}) das Paßwort entschlüsselt und mindestens das entschlüsselte Paßwort (MdP) oder ein daraus abgeleitetes Paßwort (MdP_{TRANS}) an die Authentifizierungseinheit (1) überträgt, um die Gültigkeit dieses Paßwortes durch die Authentifizierungseinheit zu prüfen.

2. System nach Anspruch 1, **dadurch gekennzeichnet, daß** eine Clienteinheit (2) zum Zwecke ihrer Funktionsweise mindestens einen auswechselbaren Speicherträger (208) umfaßt.

3. System nach Anspruch 2, **dadurch gekennzeichnet, daß** der Speicherträger (208) geeignet ist, die Entschlüsselungsfunktion eines verschlüsselten Paßwortes (MdP_{CHIF}) zu gewährleisten.

4. System nach Anspruch 2 oder 3, **dadurch gekennzeichnet, daß** jeder Speicherträger eine Mikroprozessorkarte (208) ist.

5. System nach einem der Ansprüche 1 bis 4, **dadurch gekennzeichnet, daß** für die Durchführung der Verschlüsselung und Entschlüsselung des Paßwortes die Mittel zur dynamischen Authentifizierung (103) und die Clienteinheit (2) einen asymmetrischen Algorithmus verwenden.

6. System nach einem der Ansprüche 3 und 5, **dadurch gekennzeichnet, daß** der asymmetrische Verschlüsselungs-/Entschlüsselungsalgorithmus einen doppelten Schlüssel (K_{PUB}, K_{PR}) verwendet, wobei K_{PUB} ein öffentlicher Schlüssel und K_{PR} ein privater Schlüssel ist, und **dadurch**, daß der private Schlüssel (K_{PR}) im auswechselbaren Speicherträger (208) aufbewahrt ist.

7. System nach Anspruch 6, **dadurch gekennzeichnet, daß** jeder auswechselbare Träger (208) im Speicher ein numerisches Zertifikat (211) aufweist, welches mehrere Felder umfaßt, insbesondere den Identifikator (ID) des Benutzers, den öffentlichen Schlüssel (K_{PUB}) und eine Signatur der Einheit der Felder des Zertifikats, und **dadurch**, daß die Clienteinheit (2) so ausgelegt ist, daß sie sich im Laufe des Authentifizierungsverfahrens eines Benutzers das numerische Zertifikat (211), das in dem auswechselbaren Träger (208) aufbewahrt ist, der in der Clienteinheit (2) angeordnet ist, beschafft und das Zertifikat an die Mitteln für die dynamische Authentifizierung (103) überträgt, und **dadurch**, daß die Mittel zur dynamischen Authentifizierung (103) geeignet sind, die Gültigkeit eines Zertifikats, das ihnen von einer Clienteinheit (2) geschickt wird, zu überprüfen.

8. System nach einem der Ansprüche 1 bis 7, **dadurch gekennzeichnet, daß** jeder Speicherträger (208) mit einem Identifikator (ID) parametriert ist, der den Benutzer kennzeichnet.

9. System nach einem der Ansprüche 1 bis 6, **dadurch gekennzeichnet, daß** jeder auswechselbare Träger (208) mit einem vorbestimmten "PIN"-Code parametriert und so ausgelegt ist, daß er im Laufe einer Vorphase, die als "Trägerauthentifizierung" bezeichnet wird, einen Vergleich dieses vorbestimmten PIN-Codes mit einem Code durchführt, der vom Benutzer in die Clienteinheit (2) eingegeben wird.

10. Verfahren zur Authentifizierung eines Benutzers mit Hilfe eines Authentifizierungssystems, welches mindestens
eine Clienteinheit (2), welche es einem Benutzer ermöglicht, das Authentifizierungsverfahren auszulösen, und
eine Authentifizierungseinheit (1) aufweist, welche eine Einheit für voreingetragene Paßwörter (MdP') umfaßt, wobei jedes Paßwort dieser Einheit einem Identifikator (ID) zugeordnet ist,
wobei es die Clienteinheit (2) im Laufe des Authentifizierungsverfahrens ermöglicht, an die Authentifizierungseinheit (1) einen Identifikator (ID) und ein Paßwort (MdP) zu senden,
wobei die Authentifizierungseinheit (1) die Funktion hat, im Laufe eines Authentifizierungsverfahrens die Gültigkeit eines Paßwortes (MdP) zu überprüfen, welches von einer Clienteinheit stammt, indem die Übereinstimmung zwischen dem erhaltenen Paßwort und dem Paßwort (MdP') geprüft wird, welches in der Einheit für die voreingetragenen Paßwörter dem empfangenen Identifikator (ID) zugeordnet ist,
**dadurch gekennzeichnet,**
**daß** das System ferner Mittel zur dynamischen Authentifizierung (103) umfaßt, die Clienteinheit (2) den Identifikator (ID) des Benutzers an die Mittel zur dynamischen Authentifizierung (103) sendet und nach dem Empfang des Identifikators (ID) die Mittel zur dynamischen Authentifizierung (103):
(a) automatisch ein neues Paßwort zu einmaliger Verwendung (MdP) erzeugen,
(b) in der Einheit für die voreingetragenen Paßwörter das Paßwort (MdP'), das dem erhaltenen Identifikator (ID) zugeordnet ist, durch das neue Paßwort zu einmaliger Verwendung (MdP), welches erzeugt worden ist, oder durch ein davon abgeleitetes Paßwort (MdP_{TRANS}) ersetzen,
(c) das neue Paßwort zu einmaliger Verwendung (MdP), das erzeugt worden ist, verschlüsseln und an die Clienteinheit (2) das verschlüsselte Paßwort zu einmaliger Verwendung (MdP_{CHIF}) übertragen, und
**daß** die Clienteinheit (2) nach dem Erhalten des neuen verschlüsselten Paßwortes zu einmaliger Verwendung (MdP_{CHIF}) das Paßwort entschlüsselt und mindestens das entschlüsselte Paßwort (MdP) oder ein daraus abgeleitetes Paßwort (MdP_{TRANS}) an die Authentifizierungseinheit (1) überträgt, um die Gültigkeit dieses Paßwortes durch die Authentifizierungseinheit zu prüfen.

## Claims

1. System for authenticating a user, the said system comprising at least one customer unit (2) which allows a user to trigger off an authentication procedure, and one authenticating unit (1) which includes a number of pre-recorded passwords (MdP'), each password of this group being associated with an identifier (ID), the customer unit (2) allowing, in the course of an authenticating procedure, for sending to the authenticating unit (1) an identifier (ID) and a password (MdP), the function of the authenticating unit (1) being, in the course of an authentication procedure, to check the validity of a password (MdP) addressed by a customer unit by verifying the coherence between the password received and the password (MdP') which, in all of the pre-recorded passwords, is associated with the identifier (ID) received, **characterised in that** it also includes dynamic means of authentication (103) which, at the time of each authentication procedure triggered off by a customer unit (2), receive the user's identifier (ID), and:
(a) automatically generate a new single purpose password (MdP);
(b) replace in the assembly of pre-recorded passwords, the password (MdP') associated with the identifier (ID) received, with the new single purpose password (MdP) which has been generated by a password (MdP_{TRANS}) which is derived from it;
(c) encode the new single purpose password (MdP) which has been generated, and transmit to the said customer unit (2) the single purpose encoded password (MdP_{CHIF}), and **in that** the said customer unit (2) is designed, after receiving the new single purpose encoded password (MdP_{CHIF}), to decode the said password and transmit at least the decoded password (MdP) or a password (MdP_{TRANS}) which is derived from it, to the authenticating unit (1) with a view to the validity of that password being checked by the said authenticating unit.

2. System according to Claim 1, **characterised in that**, for its operation, a customer unit (2) includes at least a removable storage medium (208).

3. System according to Claim 2, **characterised in that** the storage medium (208) is able to ensure the function of decoding an encoded password (MdP _{CHIF}).

4. System according to Claim 2 or 3, **characterised in that** each storage medium is a microprocessor card (208).

5. System according to one of the Claims 1 to 4, **characterised in that**, in order to encode and decode a password, the dynamic authentication means (103) and the customer unit (2) use an asymmetrical algorithm.

6. System according to Claims 3 and 5, **characterised in that** the asymmetrical encoding/decoding algorithm uses a bi- key (K_{PUB}, K_{PR} ), K_{PUB} being a public key and K_{PR} being a private key, and **in that** the private key (K_{PR}) is stored in the memory in the removable medium (208).

7. System according to Claim 6, **characterised in that** each removable medium (208) has in the memory a digital certificate (211) containing several fields, including in particular the user's identifier (ID), the public key (K_{PUB}), and a signature of all of the fields in the certificate, **in that** the customer unit (2) is designed, during the course of the procedure for authenticating a user, to recover the digital certificate (211) stored in the removable medium (208) which is located in the customer unit (2), and to transmit the said certificate to the dynamic means of authentication (103), and **in that** the dynamic means of authentication (103) are capable of checking the validity of a certificate which is sent to it by a customer unit (2).

8. System according to one of the Claims 1 to 7, **characterised in that** each storage medium (208) is parametered with an identifier (ID) which characterises the user.

9. System according to one of the Claims 1 to 6, **characterised in that** each removable medium (208) is parametered with a predefined "PIN" code and is designed, during a prior phase called "carrier authentication", to make a comparison of this predefined PIN code with a code entered by the user in the customer unit (2).

10. Method of authenticating a user by means of an authentication system containing at least one customer unit (2), which enables a user to trigger off the authentication process, and one authenticating unit (1) which includes a number of pre-recorded passwords (MdP'), each password of this group being associated with an identifier (ID), the customer unit (2) enabling, during the authentication process, an identifier (ID) and a password (MdP) to be sent to the authenticating unit (1), the purpose of the authenticating unit (1), during the authentication process, being to check the validity of a password (MdP) addressed by a customer unit by checking the coherence between the password received and the password (MdP) which, in the assembly of pre-recorded passwords, is associated with the identifier (ID) received, **characterised in that**, as the authentication system includes in addition dynamic means of authentication (103), the customer unit (2) sends the user's identifier (ID) to the dynamic authenticating means (103), and after receipt of this identifier (ID), the dynamic means of authentication (103):
a) automatically generate a new single purpose password (MdP);
b) in the number of pre-recorded passwords, replace the password (MdP') associated with the identifier (ID) received
with the new single purpose password (MdP) which has been generated or with a password (MdP'_{TRANS}) which is derived from it;
c) encode the new single purpose password (MdP) which has been generated, and transmit, to the said customer unit (2), the single purpose encoded password (MdP_{CHIF}), and **in that** the said customer unit (2), after receipt of the new single purpose encoded password (MdP_{CHIF}) decodes the said password and transmits at least the decoded password (MdP) or a password (MdP_{TRANS}) which is derived from it, to the authenticating unit (1) with a view to having the validity of this password checked by the said authenticating unit.
